## Europäisches Patentamt
## European Patent Office
## Office européen des brevets

(19)

(11) Veröffentlichungsnummer: **0 100 881**
**B1**

(12) **EUROPÄISCHE PATENTSCHRIFT**

(45) Veröffentlichungstag der Patentschrift:
03.09.86

(21) Anmeldenummer: **83106696.4**

(22) Anmeldetag: **06.07.83**

(51) Int. Cl.⁴: **C 22 C 29/06,** C 22 C 1/05,
C 01 B 31/30, C 01 B 31/34

(54) **Hartmetall.**

(30) Priorität: **31.07.82 DE 3228692**

(43) Veröffentlichungstag der Anmeldung:
**22.02.84 Patentblatt 84/8**

(45) Bekanntmachung des Hinweises auf die Patenterteilung:
**03.09.86 Patentblatt 86/36**

(84) Benannte Vertragsstaaten:
**FR GB SE**

(56) Entgegenhaltungen:
**WO-A-79/00089**
**DE-A-2 833 016**
**DE-B-1 243 399**
**DE-C-307 764**
**GB-A-477 572**
**GB-A-1 483 527**

(73) Patentinhaber: **Fried. Krupp Gesellschaft mit
beschränkter Haftung, Altendorfer Strasse 103,
D-4300 Essen 1 (DE)**

(72) Erfinder: **Kolaska, Johannes, Walter- Höfer- Weg
25, D-4250 Bottrop (DE)**
Erfinder: **Grewe, Hans, Dr., Kiefernstrasse 4,
D-4155 Grefrath- Vinkrath (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein Hartmetall, dessen Bindemetallphase aus Eisen, Kobalt und/ oder Nickel und dessen Hartstoffphase aus hexagonalen Mischcarbiden des MoC mit WC und/oder aus kubischen Mischcarbiden des MoC mit den Carbiden des Ti, Zr, Hf, V, Nb, Ta und/oder Cr besteht. In diesem Hartmetall beträgt der Gehalt der Bindemetallphase 3 bis 30 Gew.-% und der Gehalt der Hartstoffphase 70 bis 97 Gew.-%. Die hexagonalen Mischcarbide (Mo,W)C bestehen zu 10 bis 90 Gew.-% aus MoC und zu 10 bis 90 Gew.-% aus WC. Die kubischen Mischcarbide (Mo,Me)C, Me = Ti, Zr, Hf, V, Nb, Ta und/oder Cr, bestehen zu 10 bis 90 Gew.-% aus MoC und zu 10 bis 90 Gew.-% aus MeC. Wenn die Hartstoffphase sowohl hexagonale als auch kubische Mischcarbide enthält, beträgt der Gehalt an hexagonalen Mischcarbiden 10 bis 90 Gew.-% und der Gehalt an kubischen Mischcarbiden 10 bis 90 Gew.-%. Derartige Hartmetalle haben eine hohe Verschleißfestigkeit und werden daher zur Herstellung von Werkzeugen für die spanlose und spanende Werkstoffbearbeitung, insbesondere zur Herstellung von Wendeschneidplatten für die Metallbearbeitung, verwendet. Die Erfindung bezieht sich ferner auf ein Verfahren zur Herstellung des Hartmetalls.

Die gegenwärtig zur Werkstoffbearbeitung verwendeten Hartmetalle bestehen aus einer Bindemetallphase und aus einer Hartstoffphase, wobei die Hartstoffphase in den meisten Fällen aus WC, TiC, TaC und/oder NbC gebildet wird. Als Bindemetall wird vorzugsweise Kobalt eingesetzt. Als Hartstoff wird heute noch immer das Wolframcarbid bevorzugt, obwohl die Verfügbarkeit des Wolframs abnimmt, was bei diesem Rohstoff zu Preisschwankungen und Lieferschwierigkeiten geführt hat bzw. führen wird. Deshalb hat es nicht an Versuchen gefehlt, daß Wolframcarbid in den Hartmetallen durch einen anderen Hartstoff zu substituieren.

Es ist bereits bekannt, daß WC, welches eine hexagonale Kristallstruktur besitzt, durch hexagonales MoC zumindest teilweise substituiert werden kann, weil beide Carbide vergleichbare physikalische, chemische und mechanisch-technologische Eigenschaften besitzen. Die Herstellung von hexagonalem MoC gelingt zum Beispiel dadurch, daß ein durch inniges Mischen aus Mo und C im Molverhältnis 1:1 hergestelltes Gemenge zunächst auf eine Temperatur oberhalb 2000 °C erhitzt wird, bei der sich das kubische $MoC_{1-x}$ bildet, und daß anschließend bei einer Temperatur von 1300 bis 1400 °C bis zu 300 Stunden geglüht wird, wobei sich das hexagonale MoC bildet. Die Substitution des hexagonalen WC durch hexagonales MoC wird dadurch behindert, daß zur Darstellung des hexagonalen (Mo,W)C eine aufwendige Langzeitglühung erforderlich ist.

Es ist ferner bekannt, daß die Darstellung von hexagonalem MoC oder von hexagonalem (Mo,W)C dadurch beschleunigt und vereinfacht werden kann, daß dem Kohlenstoff-Molybdän-Gemenge bzw. dem Kohlenstoff-Wolfram-Molybdän-Gemenge vor der Glühung Bor, Bornitrid oder Borcarbid zugegeben wird. Diese Zusätze, die in einer Menge von 0,01 bis 1 Gew.-% zugegeben werden, verkürzen die Glühzeit. Dabei wurde allerdings in einigen Fällen beobachtet, daß bei diesen Reaktionsbedingungen nur eine weitgehende und keine quantitative Ausbildung der hexagonalen Kristallstruktur erfolgt, was häufig doch noch eine Verlängerung der Glühzeit erforderlich macht.

Auch die Darstellung der kubischen Mischcarbide vom Typ (Mo,Me)C, Me = Ti, Zr, Hf, V, Nb, Ta und/ oder Cr, erfolgt dadurch, daß zunächst durch inniges Mischen ein Gemenge aus den Komponenten C und Mo sowie Ti, Zr, Hf, V, Nb, Ta und/oder Cr hergestellt wird, wobei das Molverhältnis von Kohlenstoff zur Summe der carbidbildenden Metalle 1:1 beträgt, daß anschließend oberhalb 2000 °C geglüht wird und daß dann bei 1300 bis 1400 °C eine Langzeitglühung folgt, die bis zu 300 Stunden andauert. Auch bei der Darstellung der kubischen Mischcarbide kann die Glühzeit durch den Zusatz von Bor, Bornitrid oder Borcarbid herabgesetzt werden.

Der Erfindung liegt die Aufgabe zugrunde, ein molybdäncarbidhaltiges Hartmetall zu schaffen, dessen Hartstoffphase eine hexagonale und/oder kubische Kristallstruktur hat und einen möglichst geringen Gehalt an Fremdstoffen aufweist. Ferner liegt der Erfindung die Aufgabe zugrunde, ein Verfahren zur Herstellung dieses Hartmetalls zu schaffen, das die Darstellung einer hexagonalen und/oder kubischen Hartstoffphase bei möglichst niedrigen Temperaturen und in möglichst kurzer Zeit gestattet. Schließlich soll mit der Erfindung erreicht werden, daß die molybdäncarbidhaltigen Hartmetalle Werkstoffeigenschaften besitzen, die den Werkstoffeigenschaften der molybdäncarbidfreien Hartmetalle zumindest gleichwertig sind.

Die der Erfindung zugrundeliegende Aufgabe wird dadurch gelöst, daß die Hartstoffphase des molybdäncarbidhaltigen Hartmetalls 10 bis 50 ppm Seltenerdmetalle enthält. Es hat sich nämlich in überraschender Weise gezeigt, daß ein sehr geringer Seltenerdmetallgehalt in der Hartstoffphase die hexagonale Kristallstruktur der Mischcarbide des Typs (Mo, W)C sowie die kubische Kristallstruktur der Mischcarbide des Typs (Mo, Me)C, Me = Ti, Zr, Hf, V, Nb, Ta und/oder Cr, stabilisiert. Außer ihrer die Kristallstruktur stabilisierenden Wirkung entfalten die Seltenerdmetalle keine nachteiligen Nebenwirkungen im Hartmetall, so daß die molybdäncarbidhaltigen stabilisierten Hartmetalle sehr gute Werkstoffeigenschaften besitzen, die den Werkstoffeigenschaften der molybdäncarbidfreien Hartmetalle zumindest gleichwertig sind. Nach der Erfindung hat es sich als besonders vorteilhaft erwiesen, wenn die Hartstoffphase 15 bis 30 ppm Seltenerdmetalle enthält.

Die der Erfindung zugrundeliegende Aufgabe wird ferner dadurch gelöst, daß das bekannte Verfahren zur Herstellung eines molybdäncarbidhaltigen Hartmetalls, dessen Bindemetallphase aus Eisen, Kobalt und/oder Nickel und dessen Hartstoffphase aus hexagonalen Mischcarbiden des MoC mit WC und/oder aus kubischen Mischcarbiden des MoC mit den Carbiden des Ti, Zr, Hf, V, Nb, Ta und/oder Cr besteht, weitergebildet wird. Bei dem bekannten Herstellungsverfahren erfolgt zunächst die Erzeugung der Hartstoffphase, welche anschließend durch Mischen mit Bindemetall, Mahlen der Hartstoff-Bindemetall-Mischung, pressen der pulverförmigen Hartstoff-Bindemetall-Mischung und Sintern des Preßkörpers bei ca. 1300 bis 1600 °C im Vakuum oder einer Schutzgasatmosphäre zum Hartmetall verarbeitet wird. Bei diesem Verfahren erfolgt die Erzeugung der Hartstoffphase erfindungsgemäß in der Weise, daß der Kohlenstoff sowie die carbidbildenden Metalle gemischt und gemahlen werden, so daß ein molares Metall-Kohlenstoff-Verhältnis von 1:1 vorliegt, daß während dieses Misch- und Mahlvorgangs 10 bis 50 ppm pulverförmige Seltenerdmetalle zugegeben werden und daß die pulverförmige Mischung bei 1400 bis 1800 °C während 1 bis 2 Stunden in einer Schutzgasatmosphäre geglüht wird, wobei eine Hartstoffphase mit stabilisierter hexagonaler (Mo, W)C- und/oder kubischer (Mo, Me)C-Kristallstruktur entsteht; Me = Ti, Zr, Hf, V, Nb, Ta und/oder Cr. In überraschender Weise wurde gefunden, daß die Darstellung und Stabilisierung von hexagonalen bzw. kubischen molybdäncarbidhaltigen Mischcarbiden bei vergleichsweise niedrigen Temperaturen während einer recht kurzen Glühbehandlung der Ausgangskomponenten möglich ist. Insbesondere war nicht zu erwarten, daß 10 bis 50 ppm Seltenerdmetalle eine derartig gute katalytische Wirkung entfalten, daß die Stabilisierung der hexagonalen bzw. kubischen Kristallstruktur quantitativ ist. Das erfindungsgemäße Verfahren kann besonders erfolgreich durchgeführt werden, wenn während des Misch- und Mahlvorgangs 15 bis 30 ppm pulverförmige Seltenerdmetalle zugegeben werden und wenn als Schutzgasatmosphäre Wasserstoff verwendet wird.

Nach der Erfindung ist ferner vorgesehen, daß die Seltenerdmetalle nicht in metallischer Form, sondern als Oxide oder Nitride zugegeben werden. Damit wird erreicht, daß Schwierigkeiten bei der Handhabung von Seltenerdmetallen vermieden werden. Nach der Erfindung ist auch vorgesehen, daß die carbidbildenden Metalle in Form ihrer unterstöchiometrisch zusammengesetzten Carbide zugegeben werden. Es hat sich nämlich gezeigt, daß die carbidischen Vorprodukte, die den Kohlenstoff im unterstöchiometrischen Verhältnis enthalten und deren Zusammensetzung der Formel $MeC_{1-x}$ entspricht, unter dem Einfluß der nach der Erfindung vorgesehenen Stabilisatoren häufig schneller mit Kohlenstoff reagieren als die carbidbildenden Metalle selbst.

Nach der Erfindung ist auch vorgesehen, daß die carbidbildenden Metalle in Form ihrer Oxide zugegeben werden, wobei die eingesetzte Kohlenstoffmenge nicht nur zur Carbidbildung, sondern auch zur Reduktion der Oxide der carbidbildenden Metalle ausreicht. Durch diese Maßnahme kann in vielen Fällen eine verbesserte Verteilung des Stabilisators in der Hartstoffphase erreicht werden. Schließlich ist nach der Erfindung vorgesehen, daß die carbidbildenden Metalle Mo und W in Form von Ammoniummolybdat und Ammoniumwolframat zugegeben werden, wobei die eingesetzte Kohlenstoffmenge nicht nur zur Carbidbildung, sondern auch zur Reduktion des Ammoniummolybdats und des Ammoniumwolframats ausreicht. Durch diese Maßnahme wird nicht nur eine gute Verteilung der Stabilisatoren in der Hartstoffphase, sondern auch eine Senkung der Verfahrenskosten erreicht.

Zu den Seltenerdmetallen gehören die Elemente Sc, Y, La sowie die Lanthaniden (Elemente mit den Ordnungszahlen 58 bis 71).

Die Erfindung wird nachfolgend anhand von Ausführungsbeispielen näher erläutert.

## Beispiel 1

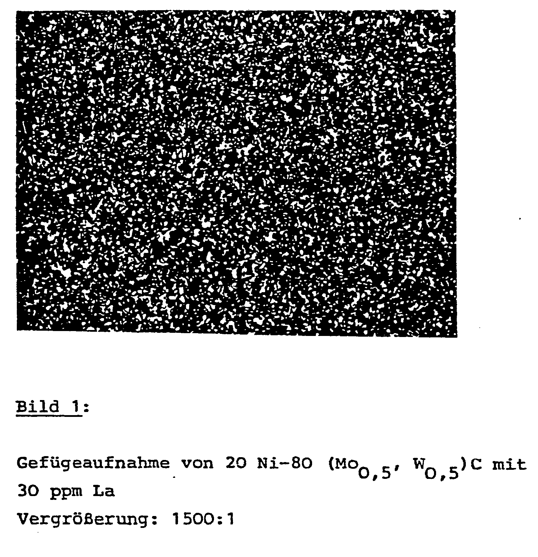

Die carbidbildenden Metalle Mo und W wurden im Molverhältnis 1:1 gemischt und fein gemahlen. Die Metallmischung wurde dann mit pulverförmigem Kohlenstoff gemischt, so daß ein molares Metall-Kohlenstoff-Verhältnis von 1:1 vorlag. Während dieses Mischvorgangs wurden 30 ppm pulverförmiges La hinzugefügt. Diese Mischung wurde anschließend bei 1600 °C während 90 Minuten in einer Wasserstoffatmosphäre geglüht. Die so hergestellte Hartstoffphase wurde vorzerkleinert, anschließend mit Nickel im Gewichtsverhältnis von 80:20 gemischt und in bekannter Weise zu einem verschleißfesten Hartmetall verarbeitet, das die Zusammensetzung 20 Ni-80 $(Mo_{0,5},W_{0,5})C$ hatte, wobei der Stabilisatorgehalt der Hartstoffphase in der Formel vernachlässigt wurde. Bild 1 zeigt das Hartmetallgefüge, das bei guter Verteilung der Bindemetallphase dicht und sehr feinkörnig ist und eine quantitativ ausgebildete, hexagonale Kristallstruktur aufweist. Bei der röntgenographischen Untersuchung der Probe wurde nur eine hexagonale Kristallstruktur identifiziert, und es wurden keine Phasenanteile vom Typ $Me_2C$ aufgefunden. Nachfolgend werden Eigenschaften von zwei Chargen dieses Hartmetalls angegeben. Die beiden Chargen unterscheiden sich dadurch, daß die abschließende Sinterung bei geringfügig unterschiedlichen Temperaturen durchgeführt wurde.

| Eigenschaften | Proben aus Charge I | Proben aus Charge II |
|---|---|---|
| Porosität nach ASTM | < A 02 | < A 02 |
| Dichte (g/cm³) | 11,46 | 11,41 |
| Härte HV30 | 1200 | 1140 |
| Biegefestigkeit (N/mm²) | 1870 | 1980 |
| Druckfestigkeit (N/mm²) | 4850 | 3910 |

**Beispiel 2**

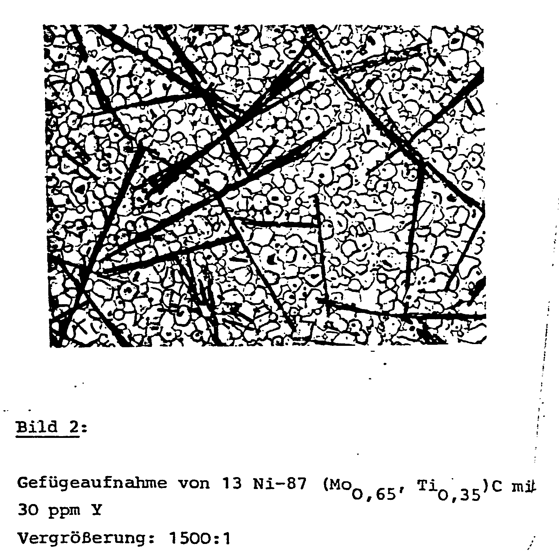

Die carbidbildenden Metalle Mo und Ti wurden im Molverhältnis 65:35 gemischt und zusammen mit Kohlenstoff gemahlen, wobei ein molares Metall-Kohlenstoff-Verhältnis von 1:1 vorlag. Während des Mischens und Mahlens wurden 30 ppm pulverförmiges Y zugegeben. Die Mischung der Ausgangskomponenten wurde dann bei 1600 °C während 2 Stunden in einer Wasserstoffatmosphäre geglüht, wobei sich die kubische Hartstoffphase bildete. Die Hartstoffphase wurde nach einer Vorzerkleinerung mit Nickel im Gewichtsverhältnis 87:13 gemischt und anschließend nach den bekannten Methoden zu einem verschleißfesten Hartmetall weiterverarbeitet, das die Zusammensetzung 13 Ni-87 $(Mo_{0,65} Ti_{0,35})C$ hatte, wobei der sehr geringe Stabilisatorgehalt in der Formel vernachlässigt wurde. Bild 2 zeigt die Struktur dieses Hartmetalls. Bei der röntgenographischen Untersuchung wurde festgestellt, daß die Hartstoffphase ein vollständig kubisches Gitter besitzt. Die Gefügeuntersuchung zeigte, daß ein Teil der kubischen Hartstoffphase eine sphärische Form und der andere Teil eine nadelartige Form hat. Beide Formen haben aber die gleiche Michcarbidzusammensetzung und die gleiche kubische Kristallstruktur. Die Verteilung der Bindemetallphase im Hartmetall ist recht gleichmäßig, und das Gefüge des Hartmetalls ist dicht. Nachfolgend werden Eigenschaften von zwei Chargen dieses Hartmetalls angegeben. Die beiden Chargen unterscheiden sich lediglich dadurch, daß die abschließende Sinterung bei geringfügig unterschiedlichen Temperaturen erfolgte.

Eigenschaften Proben aus Proben aus
Charge I - Charge II
Porosität nach ASTM < A 02 < A 02
Dichte $(g/cm^3)$ 7,75 7,76 > > ärte HV30 1285 1270
Biegefestigkeit $(N/mm^2)$ 1560 1630
Druckfestigkeit $(N/mm^2)$ 4150 4010

Die Biegefestigkeit dieses Hartmetalls geht weit über die Biegefestigkeiten der bekannten Hartmetalle mit vergleichbarer Zusammensetzung hinaus.

**Patentansprüche**

1. Hartmetall, dessen Bindemetallphase aus Eisen, Kobalt und/oder Nickel und dessen Hartstoffphase aus hexagonalen Mischcarbiden des MoC mit WC und/oder aus kubischen Mischcarbiden des MoC mit den Carbiden des Ti, Zr, Hf, V, Nb, Ta und/oder Cr besteht, dadurch gekennzeichnet, daß die Hartstoffphase 10 bis 50 ppm Seltenerdmetalle enthält.

2. Hartmetall nach Anspruch 1, dadurch gekennzeichnet, daß die Hartstoffphase 15 bis 30 ppm Seltenerdmetalle enthält.

3. Verfahren zur Herstellung eines Hartmetalls, dessen Bindemetallphase aus Eisen, Kobalt und/oder Nickel und dessen Hartstoffphase aus hexagonalen Mischcarbiden des MoC mit WC und/oder aus kubischen Mischcarbiden des MoC mit den Carbiden des Ti, Zr, Hf, V, Nb, Ta und/oder Cr besteht, wobei zunächst die Erzeugung der Hartstoffphase erfolgt, welche anschließend durch Mischen mit Bindemetall, Mahlen der Hartstoff-Bindemetall-Mischung, Pressen der pulverförmigen Hartstoff-Bindemetall-Mischung und Sintern des Preßkörpers bei ca. 1300 bis 1600 °C im Vakuum oder einer Schutzgasatmosphäre zum Hartmetall verarbeitet wird, dadurch gekennzeichnet, daß der Kohlenstoff sowie die carbidbildenden Metalle gemischt und gemahlen werden, so daß ein molares Metall-Kohlenstoff-Verhältnis von 1:1 vorliegt, daß während dieses Misch- und Mahlvorgangs 10 bis 50 ppm pulverförmige Seltenerdmetalle zugegeben werden und daß die pulverförmige Mischung bei 1400 bis 1800 °C während 1 bis 2 Stunden in einer Schutzgasatmosphäre geglüht wird, wobei eine Hartstoffphase mit stabilisierter hexagonaler (Mo, W)C- und/oder kubischer (Mo, Me)C-Kristallstruktur entsteht; Me = Ti, Zr, Hf, V, Nb, Ta und/oder Cr.

4. Verfahren nach Anspruch 3, dadurch gekennzeichnet, daß während des Misch- und Mahlvorgangs 15 bis 30 ppm pulverförmige Seltenerdmetalle zugegeben werden.

5. Verfahren nach den Ansprüchen 3 bis 4, dadurch gekennzeichnet, daß als Schutzgasatmosphäre Wasserstoff verwendet wird.

6. Verfahren nach den Ansprüchen 3 bis 5, dadurch gekennzeichnet, daß die Seltenerdmetalle in Form ihrer Oxide oder Nitride zugegeben werden.

7. Verfahren nach den Ansprüchen 3 bis 6, dadurch gekennzeichnet, daß die carbidbildenden Metalle in Form ihrer unterstöchiometrisch zusammengesetzten Carbide zugegeben werden.

8. Verfahren nach den Ansprüchen 3 bis 6, dadurch gekennzeichnet, daß die carbidbildenden Metalle in Form ihrer Oxide zugegeben werden, wobei die eingesetzte Kohlenstoffmenge nicht nur zur Carbidbildung, sondern auch zur Reduktion der Oxide der carbidbildenden Metalle ausreicht.

9. Verfahren nach den Ansprüchen 3 bis 6, dadurch gekennzeichnet, daß die carbidbildenden Metalle Mo und W in Form von Ammoniummolybdat und Ammoniumwolframat zugegeben werden, wobei die eingesetzte Kohlenstoffmenge nicht nur zur Carbidbildung, sondern auch zur Reduktion des Ammoniummolybdats und des Ammoniumwolframats ausreicht.

## Revendications

1. Métal dur dont la phase de liant métallique est constituée par du fer, du cobalt et/ou du nickel et dont la phase d'alliages durs est constituée par des carbures mixtes hexagonaux de Mo C avec WC et/ou par des carbures mixtes cubiques de Mo C avec des carbures de Ti, Zr, Hf, V, Nb, Ta et/ou Cr, caractérisé en ce que la phase d'alliages durs contient de 10 à 50 ppm de métaux de terres rares.

2. Métal dur selon la revendication 1, caractérisé en ce que la phase d'alliages durs contient de 15 à 30 ppm de métaux de terres rares.

3. Procédé de fabrication d'un métal dur dont la phase de liant métallique est constituée par du fer, du cobalt et/ou du nickel et dont la phase d'alliages durs est constituée par des carbures mixtes hexagonaux de Mo C avec WC et/ou par des carbures mixtes cubiques de Mo C avec des carbures de Ti, Zr, Hf, V, Nb, Ta et/ou Cr, dans lequel on commence par produire la phase d'alliages durs qui, ensuite, est transformée en métal dur par mélange avec du liant métallique, broyage du mélange d'alliages durs et de liant métallique, compression du mélange pulvérulent d'alliages durs et de liant métallique et frittage du corps comprimé à une température de 1300 à 1600°C environ sous vide ou dans une atmosphère protectrice d'hydrogène, caractérisé en ce que le carbone et les métaux formant les carbures sont mélangés et broyés de manière à réaliser un rapport molaire métal-carbone de 1: 1, en ce que, pendant cette opération de mélange et de broyage, on ajoute 10 à 50 ppm de métaux de terres rares pulvérulents et en ce que le mélange pulvérulent est soumis à une température de 1400 à 1800°C pendant une durée de 1 à 2 heures dans une atmosphère protectrice, à un recuit pendant lequel il y a formation d'une phase d'alliages durs présentant une structure stabilisée hexagonale (Mo, W)C et/ou cubique (Mo, Me)C; Me = Ti, Zr, Hf, V, Nb, Ta et/ou Cr.

4. Procédé selon la revendication 3, caractérisé en ce que, pendant l'opération de mélange et de broyage, on ajoute de 15 à 30 ppm de métaux de terres rares pulvérulents.

5. Procédé selon l'une des revendications 3 à 4, caractérisé en ce que l'atmosphère protectrice est de l'hydrogène.

6. Procédé selon l'une des revendications 3 à 5, caractérisé en ce que les métaux de terres rares sont ajoutés sous la forme de leurs oxydes ou de leurs nitrures.

7. Procédé selon l'une des revendications 3 à 6, caractérisé en ce que les métaux formant les carbures sont ajoutés sous la forme de leurs carbures de composition hypostoechiométrique.

8. Procédé selon l'une des revendications 3 à 6, caractérisé en ce que les métaux formant les carbures sont ajoutés sous la forme de leurs oxydes, la quantité de carbone ajoutée suffisant non seulement à la formation des carbures, mais également à la réduction des oxydes des métaux formant les carbures.

9. Procédé selon l'une des revendications 3 à 6, caractérisé en ce que les métaux formant des carbures Mo et W sont ajoutés sous la forme de molybdate d'ammonium et de tungstate d'ammonium, la quantité de carbone ajoutée suffisant non seulement à la formation des carbures, mais également à la réduction du molybdate d'ammonium et du tungstate d'ammonium.

## Claims

1. A hard metal composite, the binding metal phase of which is of iron, cobalt and/or nickel and the hard substance phase of which is of hexagonal mixed carbides or MoC with WC and/or of cubic mixed carbides of MoC with carbides of Ti, Zr, Hf, V, Nb, Ta and/or Cr, characterised in that the hard substance phase contains from 10 to 50 ppm. of rare earth metals.

2. A hard metal composite according to claim 1, characterised in that the hard substance phase contains from 15 to 30 ppm. of rare earth metals.

3. A process for the production of a hard metal composite the binding metal phase of which is of iron, cobalt and/or nickel and the hard substance phase of which is of hexagonal mixed carbides of MoC with WC and/or of cubic mixed carbides of MoC with carbides of Ti, Zr, Hf, V, Nb, Ta and/or Cr, in which firstly the production of the hard substance phase takes place, which is then processed into the hard metal composite by mixing with binding metal, grinding the hard substance-binding metal mixture, pressing the hard substance-binding metal mixture in powder form and sintering the pressing at about 1,300 to 1,600° C. in vacuo or under a protective gas atmosphere, characterised in that the carbon and the carbideforming metals are mixed and ground so that a molar metal-carbon ratio of 1: 1 is present, in that during this mixing and grinding action from 10 to 50 ppm, of rare earth metals in powder form are added and in that the mixture in powder form is annealed at a temperature in a range of from 1,400 to 1,800° C. for 1 to 2 hours in a protective gas atmosphere, a hard substance phase with stabilised hexagonal (Mo, W)C- and/or cubic (Mo, Me)C- crystal structure being produced; Me = Ti, Zr, Hf, V, Nb, Ta and/or Cr.

4. A process according to claim 3, characterised in that during the mixing and grinding action from 15 to 30 ppm. of rare earth metals in powder form are added.

5. A process according to claims 3 to 4, characterised in that hydrogen is used as the protective gas atmosphere.

6. A process according to claims 3 to 5, characterised in that the rare earth metals are added in the form of their oxides or nitrides.

7. A process according to any one of claims 3 to 6, characterised in that the carbide-forming metals are added in the form of their carbides of substoichiometric composition.

8. A process according to any one of claims 3 to 6, characterised in that the carbide-forming metals are added in the form of their oxides, the carbon quantity utilised sufficing not only for carbide formation but also for reduction of oxides of the carbide-forming metals.

9. A process according to any one of claims 3 to 6, characterised in that the carbide-forming metals Mo and W are added in the form of ammonium molybdate and ammonium tungstate, the quantity of carbon present being sufficient not only for carbide formation but also for reduction of the ammonium molybdate and the ammonium tungstate.

Bild 1:

Gefügeaufnahme von 20 Ni-80 $(Mo_{0,5}, W_{0,5})C$ mit
30 ppm La
Vergrößerung: 1500:1

1

Bild 2:

Gefügeaufnahme von 13 Ni-87 $(Mo_{0,65}, Ti_{0,35})C$ mit
30 ppm Y

Vergrößerung: 1500:1